# EUROPÄISCHE PATENTSCHRIFT

(11) **EP 1 642 038 B1**
(45) Veröffentlichungstag und Bekanntmachung des Hinweises auf die Patenterteilung: **25.04.2012**
(21) Anmeldenummer: 04740507.1
(22) Anmeldetag: 01.07.2004
(51) Int. Cl.: F16D 3/38

(54) **KREUZGELENKANORDNUNG FÜR DEN EINSATZ IN GELENKWELLEN UND GELENKWELLE**
UNIVERSAL JOINT ARRANGEMENT USED IN PROPSHAFTS, AND PROPSHAFT
ENSEMBLE JOINT DE CARDAN DESTINE A ETRE UTILISE DANS DES ARBRES DE TRANSMISSION, ET ARBRE DE TRANSMISSION

(30) Priorität: 03.07.2003 DE 10330203
(43) Veröffentlichungstag der Anmeldung: 05.04.2006
(73) Patentinhaber: Voith Turbo GmbH & Co. KG, 89522 Heidenheim (DE)
(72) Erfinder: BECKER, Markus, 45131 Essen (DE)
(74) Vertreter: Dr. Weitzel & Partner
(86) Internationale Anmeldenummer: PCT/EP2004/007136
(87) Internationale Veröffentlichungsnummer: WO 2005/003582

(56) Entgegenhaltungen:
- AT-B- 207 181
- DE-A- 10 001 270
- FR-A- 1 252 228
- US-A- 6 129 634
- US-A1- 2002 111 218

## Beschreibung

Die Erfindung betrifft eine Kreuzgelenkanordnung für den Einsatz in Gelenkwellen, insbesondere mit den Merkmalen aus dem Oberbegriff des Anspruches 1; ferner eine Gelenkwelle.

Gelenkwellen finden heutzutage in verschiedensten Ausführungen in stationären Antrieben sowie in Antriebssystemen für Fahrzeuge, insbesondere Schienenfahrzeuge Verwendung. Die Hauptaufgabe besteht dabei in der Übertragung der Antriebsleistung. Zusätzlich müssen diese häufig entsprechend der Einbausituation Fluchtungsfehler zwischen den einzelnen miteinander zu koppelnden Antriebstrangkomponenten ausgleichen. Eine allgemein gängige Ausführung einer drehstarren Ausgleichskupplung ist das Kreuzgelenk. Diesbezüglich wird auf die VDI Richtlinie 2722 "Homokinetische Kreuzgelenkgetriebe, einschließlich Gelenkwellen" verwiesen. Diese gestatten es, Beugewinkel bis zu 40° auszugleichen. Einen wesentlichen Nachteil stellt jedoch die bei einem Beugewinkel von > 0° auftretende Drehungleichförmigkeit zweiter Ordnung dar, welche sich der Drehzahl überlagert. Dabei führt die auftretende ungleichförmige Übertragung einer eingeleiteten konstanten Winkelgeschwindigkeit infolge der Gefahr einer Erregung von Drehschwingungen durch die laufende Verzögerung und Beschleunigung der umlaufenden Massen zur größeren Beanspruchung und vorzeitigem Verschleiß der Lager sowie der Bauteile des Gelenkes selbst. Durch die Verwendung eines zweiten Kreuzgelenkes in einem Wellenstrang kann diese Ungleichförmigkeit in der Antriebsbewegung aufgehoben werden. Die durch diese Kopplung entstehenden Gelenkwellen sind durch zwei Kreuzgelenke charakterisiert, die über einen Mittenteil miteinander gekoppelt sind. Um Jedoch den vollkommenen Ausgleich der Ungleichförmigkeit derartiger Gelenkwellen zu erzielen, die in einer Ebene gebeugt sind, das heißt in Z- oder W-Anordnung angeordnet werden, müssen jedoch noch folgende Forderungen erfüllt werden:
1. Die beiden Kreuzgelenke müssen in einer Ebene liegen.
2. Die Beugewinkel müssen gleich groß sein.

Nur diese Bedingungen stellen sicher, dass das zweite abtriebsteilig angeordnete Kreuzgelenk mit einer Phasenverschiebung von 90° arbeitet und den kausalen Fehler des ersten Kreuzgelenkes vollständig kompensiert. Wird eine der Bedingungen nicht erfüllt, arbeitet die Gelenkwelle nicht mehr homokinetisch. Die genannten Voraussetzungen sind dabei insbesondere beim Einsatz von Kreuzgelenkwellen in Fahrzeugantrieben in den meisten Betriebszuständen nicht gegeben. Somit ist eine permanente Anregung des Antriebstrangs mit der zweiten Ordnung der Gelenkwellendrehzahl vorhanden, was je nach Antriebstrang und Ausführung zu einer erheblichen Zusatzbelastung der vor- und nachgeschalteten Komponenten, insbesondere von deren Lager sowie Kopplungen mit anderen Elementen führt. Ferner führt die Nichtparallelität der beiden Wellenenden aufgrund der Drehschwingungsanregung im Antriebstrang zu einer dynamischen Belastung in den Wälzlagern der Zapfenkreuze der Kreuzgelenke. Ist der radiale Wellenversatz und damit der Beugewinkel für die Gelenkwelle zu groß, führt die Winkelbeschleunigung des Mittenteiles in Abhängigkeit von dessen Massenträgheit ebenfalls zu einer dynamischen Belastung in den Wälzlagern der Zapfenkreuze und in Abhängigkeit von der Drehzahl zu dynamischen Belastungen an den, die Lager abstützenden Elementen. Kann aus konstruktiven Gründen kein nennenswerter Beugewinkel für die Gelenkwelle realisiert werden, führen die Wälzkörper in den Zapfenkreuzlagern keine oder nur eine sehr geringe Rollbewegung aus. Dadurch wird die spezifische Belastung in Form der Herzschen Pressung zwischen den einzelnen Wälzkörpern und den Laufbahnen bzw. den die Laufbahn bildenden Elementen insbesondere bei dynamischer Drehmomentenübertragung zu groß. Die dynamischen Belastungen auf den Herzschen Kontakt in den Wälzlagern führt bei zu kleinen Rollbewegungen der Wälzkörper zu sehr hohem Verschleiß. Die zu erwartende Lebensdauer einer unter diesen Betriebsbedingungen laufenden Gelenkwelle ist dabei sehr stark eingeschränkt.

Die bekannten verwendbaren Kreuzgelenkanordnungen, insbesondere Lageranordnungen für Kreuzgelenke umfassen in der Regel ein Axial- und ein Radiallager. Um eine möglichst steife Lageranschlusskonstruktion bei gleichzeitiger Anpassung an die genannten Belastungen zu realisieren, sind die einzelnen Bauelemente der Lagerung, die Dichtungen sowie die Anschlusskonstruktion der Lager und die das Drehmoment übertragenden Verbindungen hinsichtlich der Spannungsverteilung und Verformungen sorgfältig aufeinander abgestimmt. Sehr hoher Drehmomentstöße und gleichzeitiger Querbeschleunigung, insbesondere bei stoßartigen Belastungen bei großen und sich rasch änderndem Beugewinkel verursachen elastische Verformungen in der Gelenkgabel insbesondere auch innerhalb des Lagerteiles. Die Lagerbohrung weitet sich und nimmt dabei in der Regel eine unrunde Form an. Eine ebenfalls nicht marginale Verformung am Zapfenkreuz wird durch die Einleitung der Umfangskraft erzeugt. Ihre Richtung variiert dabei mit dem positiven oder negativen Wert des Betriebsbeugewinkels und wechselt außerdem mit jedem Reversiervorgang. Diese betriebs- sowie konstruktionsbedingten Einflüsse ergeben Fluchtungsfehler mit einer ungünstigen Lasteinleitung in die jeweiligen Lager, nämlich einen Mittenversatz der Gabelbohrung bzw. eine Schrägstellung der Bohrung, ein Durchbiegen des Zapfes sowie ein Radialspiel im Wälzlager und die Einfederung dessen. Die Folge ist dabei eine ungleichmäßige radiale Druckverteilung in der Lagerung und führt, wie bereits ausgeführt von einer Linienzur Punktberührung an den Kontaktstellen der Wälzkörper und zu überhöhten Kantenspannungen. Um immer eine Parallelität der Laufbahnen für die Wälzelemente der einzelnen Lager- Axial und/oder Radiallager zu gewährleisten sind dabei unterschiedliche Lösungen bekannt. Diese beziehen sich im Wesentlichen auf die Ausgestaltung der Lageranordnung selbst sowie die Anbindung der einzelnen Lager- Axial- oder Radiallager an die Anschlusselemente. Insbesondere für das Axiallager ist eine elastische Ausführung bzw. elastische Anbindung in verschiedensten Ausführungen bekannt. Stellvertretend wird auf nachfolgend genannte Druckschriften verwiesen:
1. CH 346735
2. DE 44 39 998 81
3. US 3,050,351
4. GB 1 370 089

Die Druckschrift CH 346735 offenbart eine Lagerung mit einer Lagerbüchse aus Kunststoff für einen Kreuzgelenkszapfen, wobei in der Lagerbuchse eine zum Anliegen an der Stirnseite des Zapfes bestimmte Gleitscheibe angeordnet ist. Diese ist beispielsweise als federnde Stahlscheibe ausgeführt und ermöglicht somit einen Ausgleich von Lageabweichungen unter Belastung des Zapfens zur Buchse bei gleichzeitiger Überleitung der über den Zapfen übertragenen Kräfte. Eine analoge Ausgestaltung ist der Druckschrift DE 44 39 998 81 zu entnehmen. Auch hier umfasst die Lagerung eine Lagerbuchse zur Aufnahme eines wälzgelagerten Lagerzapfens, welche an einem Ende einen geschlossenen Boden und an dem anderen Ende einen radial nach innen gerichteten Boden besitzt. Dabei ist ein Einlegetell zwischen einer Stirnseite des in dieser Buchse gelagerten Zapfens und dem Boden vorgesehen, Das Einlageteil ist als Federelement ausgeführt, Eine analoge Lösung ist des weiteren in der US 3 050 351 offenbart.

Die Druckschrift GB 1 390 989 offenbart allgemein die Möglichkeit der Ausgestaltung einer einzelnen Lagerung mit hinsichtlich ihrer Ausrichtung parallelen Laufflächen durch die elastische Abstützung dieser. Das einzelne Lager umfasst dazu eine äußere Lagerbüchse, in welcher eine der Laufflächen des Wälzlagers angeordnet ist und sich gegenüber dieser über ein gummielastisches Zwischenelement abstützt.

Allen Ausführungen gemeinsam ist die Ausführung von Radiallager und/oder Axiallager als Wälz- oder Gleitlager. Weitere Lager jeweils mit Wellskörpern werden In den folgenden Dokumenten vorgeschlagen:
FR 1 252 228 A
US 6 129 634 A
DE 100 01 270 A
US 2002/111218 A1
AT 207 181 B

Der Erfindung lag daher die Aufgabe zugrunde, eine Kreuzgelenkanordnung der eingangs genannten Art derart weiter zu entwickeln, dass die genannten Nachteile vermieden werden. Im Einzelnen soll diese einen einfachen Aufbau sowie eine geringe Anzahl von Bauteilen aufweisen. Die Ausschaltung der negativen

Einflüsse bei Verformung der Drehmoment übertragenden Bauteile auf die Lageranordnung, insbesondere die Radial- und Axiallager soll ohne Kenntnis der konkreten Verhältnisse des Einsatzfalles mit einer möglichst allgemein anwendbaren Lösung ausgeschlossen werden können. Die vorgeschlagene Lösung soll sich dabei durch einen geringen konstruktiven sowie fertigungstechnischen Aufwand und niedrige Kosten auszeichnen. Auch soll die Lösung geeignet sein, beim Einsatz in Gelenkwellen mit zwei Kreuzgelenkanordnungen den Kardanfehler auf einfache Art und Weise auszugleichen und somit die Funktion einer elastischen Kupplung zu übernehmen.

Die erfindungsgemäße Lösung ist durch die Merkmale von Anspruch 1 charakterisiert. Vorteilhafte Ausgestaltungen sind in den Unteransprüchen beschrieben.

Eine Kreuzgelenkanordnung für den Einsatz in Gelenkwellen umfasst wenigstens eine Gelenkgabel mit mindestens einem Flanschteil und zwei Lagertellen, In denen jeweils eine Lagerbohrung angeordnet ist. In dieser Lagerbohrung erfolgt über entsprechende Lageranordnungen die Lagerung der Zapfen eines Zapfenkreuzes. Jede Lageranordnung umfasst daher ein Radiallager und ein Axiallager. Das Radiallager dient der Abstützung des Zapfens in der Lagerbohrung in Umfangsrichtung des Zapfens. Erfindungsgemäß sind sowohl das Axial- als auch das Radiallager als gummielastische Lager, insbesondere Gummigelenklager ausgeführt.

Unter "gummielastischem Lager" wird ein Lager verstanden, welches wenigstens teilweise aus einem gummlelastischen Material besteht. Gummielastisch bedeutet dabei, dass das elastische Verformungsverhalten durch eine bestimmte Kraft-/Weg-Kurve charakterisiert ist. Diese Materialien erlauben eine Verformung um das 5 - 10flache ihrer Dimension ohne Beschädigung und gehen bei Entlastung nahezu in den Originalzustand. Diesbezüglich wird auf VDY-Lexikon "Werkstofftechnik", VDY Verlag Düsseldorf 1993 verwiesen. Vorzugsweise finden folgende Materialien Anwendung:
- Natur- oder Synthetikkautschuk
- Elastomere
- Kunststoffe mit gummielastischem Verhalten
- hochmolekulare Polymere

Das elastische Verhalten, d. h. die Verformungsfähigkeit ist dabei vorrangig, vorzugsweise allein material- und dimensionsbedingt und wird nicht nur durch die geometrische Ausgestaltung erzeugt.

Die erfindungsgemäße Lösung ermöglicht es, unabhängig von der Größe der auftretenden Verformungen am Zapfenkreuz und den mit diesen gekoppelten Bauelementen die dadurch bedingten Verformungen in dem jeweils angrenzenden Bauelement auf eine Art und Weise immer zu kompensieren. Dies bedeutet im Einzelnen, dass die aufgrund der Verformung von Zapfenkreuz oder Gelenkgabel sich ergebenden Verformungen nicht zwangsläufig auf das jeweils andere Bauelement - die Gelenkgabel oder das Zapfenkreuz übertragen werden. Ferner wird mit dieser Lösung eine sehr einfache Lageranordnung gewährleistet, die den sowohl gestellten Anforderungen bezüglich der Kraftübertragung gerecht wird als auch einen sehr einfachen Aufbau aufweist. Die gummielastischen Lager fungieren somit als Verformungslager, bei denen die Gummielastizität die Ausnutzung der leichten Horizontalverformbarkeit und Verdrehbarkeit bei kleinen Vertikalsenkungen erlaubt. Dabei bauen sich mit steigender Verschiebung oder Verdrehung elastische Rückstellkräfte bzw. Rückstellmomente auf.

Für die konkrete Ausgestaltung der gummielastischen Lager, insbesondere Gummigelenklager, bestehen eine Vielzahl von Möglichkeiten. Grundsätzlich werden jeweils zwei Grundlösungen bezüglich Ausführung und Anordnung der Lageranordnung unterschieden:
a) Ausbildung des Lagers als gummielastisches Vollelement
b) Aufbau des Lagers aus mehreren Komponenten, wobei wenigstens eine aus gummielastischem Material besteht.

Bezüglich der Zuordnung zu den sich gegeneinander abstützenden Komponenten Gelenkgabel und Zapfen zwischen der
integrierten Lösung
separaten Lösung
unterschieden.

Die integrierte Lösung ist dabei durch die Ausbildung eines gummielastischen Lagers der Lageranordnung als gummielastisches Vollelement charakterisiert. Dieses wird zur Vereinfachung der Montage und Lagerfixierung in vorteilhafter Weise an die einzelnen Elemente der Kreuzgelenkanordnung - Zapfenkreuz, insbesondere Zapfen oder Gelenkgabel, insbesondere Innenumfang der Lagerbohrung anvulkanisiert. Das entsprechende Lager-Axiallager und/oder Radiallager - bildet dann mit dem in der Gelenkgabel zu lagernden Zapfen oder der Gelenkgabel eine bauliche Einheit und kann mit diesem zusammen vorgefertigt, angeboten, gelagert und montiert werden.

Für jedes Lager einer Lageranordnung können die gummielastischen Vollelemente als separate Vollelemente oder bauliche Einheit vorliegen. Im ersten Fall sind jeweils ein gummielastisches Vollelement sowohl für das Axial- als auch das Radiallager vorgesehen. Diese sind frei von einer Kopplung miteinander. Jedes dieser als Einheit vorliegende Vollelement ist dabei an einem der gegeneinander abzustützenden Elemente - Gelenkgabel oder Zapfen - anvulkanisiert. Vorzugsweise sind beide Vollelemente am gleichen Element - Gelenkgabel oder Zapfen - anvulkanisiert. Dadurch können Gelenkgabeln und Zapfenkreuz als standardisierte Einheiten für den Einsatz in anderen Kreuzgelenkanordnungen frei miteinander kombiniert werden.

Gemäß einer besonders vorteilhaften Ausgestaltung sind die Vollelemente beider Lager in einer baulichen Einheit in Form einer das Zapfenende eines Zapfens in radialer und teilweise in axialer Richtung umschließenden Buchse ausgeführt. Diese ist ebenfalls an eine der gegeneinander abzustützenden Komponenten Gelenkgabel, insbesondere Lagerbohrung oder Zapfenkreuz, insbesondere die Innenfläche der Lagerbohrung bzw. Außenfläche als Zapfen anvulkanisiert.

Diese Lösung bietet den Vorteil einer einfachen Anwendbarkeit, insbesondere für einteilige Gelenkgabeln und Gefenkgabeln oder Gelenkgabelhälften mit geschlossener Lagerbohrung. Die Möglichkeiten der integrierten Lösung zeichnen sich durch einen hohen Grad an Kompaktheit und Vereinfachung bei gleichbleibender Funktionalität aus.

Die separate Ausführung der Lagerordnung ist durch die Freiheit von einer festen bzw. unlösbaren Verbindung zwischen Lageranordnung, insbesondere der einzelnen Lager und den Anschlusskomponenten - Gelenkgabel bzw. Zapfen - charakterisiert. Die Lageranordnung weist dabei für die einzelnen Lager gummielastische Zwischenelemente auf, die an ein diese tragendes Element anvulkanisiert sind. Bei dem das gummielastische Zwischenelement tragende Element handelt es sich um Hülsen oder Buchsen. Das gummielastische Zwischenelement ist dabei vorzugsweise als Vollelement ausgeführt, d. h. dieses beinhaltet keine Ausnehmungen, die auch aufgrund ihrer Geometrie ein elastisches Verhalten zulassen würden, sondern die Elastizität wird allein aufgrund der Materialeigenschaft für das Zwischenelement realisiert. Damit ergeben sich im Belastungsfall tatsächlich Verformungen, die reversibel sind, während im anderen Fall lediglich eine Verdrängung oder Verschiebung von Materialbereichen erfolgen würde. Diese Lösung zeichnet sich dadurch aus, dass das Lager bzw. die gesamte Lageranordnung als separat handelbare formontierte Baueinheit vorliegt. Diese Lösung bedeutet dabei keinerlei Modifikationen an den sich gegeneinander abzustützenden Elementen - Gelenkgabel, insbesondere Gelenkgabelhälfte und Zapfen des Zapfenkreuzes und ist damit auf einfache Art und Weise auch auf bereits bestehende Kreuzgelenkanordnungen durch Austausch der Lageranordnung einsetzbar. Bezüglich der Ausgestaltung der Lageranordnung bzw. der einzelnen Lager aus einem gummielastischen Zwischenelement, welches an einem das gummielastische Zwischenelement tragenden Element anvulkanisiert ist, besteht eine Mehrzahl von Möglichkeiten.

Gemäß einer ersten Ausführung für die separate Lösung umfasst die Lageranordnung eine das Zapfenende eines Zapfens des Zapfenkreuzes in radialer und axialer Richtung umschließende erste innere Buchse sowie eine diese umschließende zweite äußere Buchse, wobei zwischen beiden mindestens ein gummielastisches Zwischenelement angeordnet ist. Gemäß einer besonders vorteilhaften Ausgestaltung wird sowohl die innere Buchse des Radiallagers als auch des Axiallagers von einem von beiden Lagern gemeinsam genutzten Bauelement gebildet. Dies gilt auch für die äußere Buchse des Radial- und des Axiallagers. Die sich daraus ergebende innere Buchse für die kombinierte Radial-Axiallagerung sowie die sich daraus ergebende äußere Buchse für die kombinierte Radial-Axiallagerung weisen dazu die Form einer einseitig verschlossenen Lagerbuchse auf, wobei der in Umfangsrichtung ein Zapfenende umschließende Bereich die Abstützung für das Radiallager bildet, während der in axialer Richtung ausgerichtete und den Verschluss bildende Bereich zur Abstützung des Axiallagers dient. Die zwischen beiden Buchsen angeordneten gummielastischen Zwischenelemente sind vorzugsweise als Gummielemente, d. h. vorzugsweise als Elemente aus Kautschuk bzw. mit hohem Kautschukanteil ausgeführt. Dabei sind die Gummielemente für jedes Lager - Axial- und Radiallager - als Einzelteile ausgebildet. Dies bedeutet, zwei in ihrer Lage zueinander fest fixierte und frei von einer Kopplung miteinander ausgeführte Gummielemente für das Axiallager als auch das Radiallager. Das Gummielement des Radiallagers ist dabei ebenfalls als Buchse ausgeführt, während das Gummielement des Axiallagers die Form eines scheiben- oder ringförmigen Elementes aufweist.

Das scheibenförmige Element ist dabei am Boden der Lagerbuchse angeordnet, während das buchsenartig ausgebildet elastische Zwischenelement für das Radiallager am offenen Ende der Lagerbuchse, d. h. das in der Regel zylindrischen Teils angeordnet ist und sich entlang der sich in dieser Richtung erstreckenden Wände erstreckt.

Gemäß einer vorteilhaften Weiterentwicklung ist zwischen der inneren und äußeren Hülse bzw. Buchse lediglich nur ein gummielastisches Zwischenelement angeordnet, welches die Funktion des Axial- und Radiallagers übernimmt. Bei dieser Ausführung handelt es sich um eine einseitig wenigstens teilweise, vorzugsweise vollständig geschlossene Gummibuchse, d. h. ein zylindrisches Element mit in radialer Richtung ausgerichteter Verlängerung bzw. zumindest teilweisen einseitigem Verschluss.

Die gummielastischen Zwischenelemente, insbesondere die Gummielemente für das Axial- und das Radiallager sind in einer baulichen Einheit zusammengefasst. Dabei ist diese vorzugsweise an die äußere oder innere Buchse einvulkanisiert. Zur Ermöglichung der Verformung weist der verschlossene Endbereich mindestens eine Öffnung auf. Diese erlaubt bei Verformung ein Ausweichen von Material zwischen den beiden Buchsen, innere und äußere Buchse.

Bei diesen "Sandwich-Lösungen" sind dabei die gummielastischen Elemente vorzugsweise an eine der beiden Buchsen anvulkanisiert und dadurch hinsichtlich ihrer Lage zu den Hülsen oder Buchsen aufgrund der unlösbaren Verbindung fixiert. Denkbar ist jedoch auch eine Ausführung frei von einer derartigen Verbindung. Die gummielastischen Zwischenelemente erfahren ihre Zuordnung zu den sich gegeneinander abzustützenden Elementen dann erst in der Einbaulage.

Gemäß einer besonders vorteilhaften Ausführung, sind die gummielastischen Zwischenelemente an nur eine der Hülsen bzw. Buchsen einvulkanisiert. Es kann sich dabei um die innere oder äußere Hülse handeln. Diese Lösung zeichnet sich durch eine gute Händelbarkeit, insbesondere bei der Montage aus. Ferner kann die Lageranordnung als vormontierte Baueinheit fertiggestellt, angeboten und gelagert werden und eignet sich zum Austausch der Lageranordnungen bestehenden Kreuzgelenkanordnungen.

Die Verwendung von gummielastischen Elementen bzw. Zwischenelementen bietet den Vorteil, dass hier aufgrund der Elastizität des Werkstoffes die Verformungen an der Gelenkgabel und/oder dem Zapfenkreuz, insbesondere den einzelnen Zapfen nicht auf weitere Bauteile, insbesondere die angrenzenden Bauteile übertragen werden, sondern über das elastische Zwischenelement abgebaut werden. Dabei ist es durchaus gewünscht, dass zwischen der inneren und äußeren Buchse auftretende Schrägstellungen gegeneinander über die elastischen Zwischenelemente kompensiert werden.

Eine besonders vorteilhafte Weiterentwicklung besteht darin, auf eine separate innere Buchse zu verzichten und diese Funktion der Oberfläche bzw. dem Außenumfang des zu lagernden Zapfens zuzuordnen. In diesem Fall zeichnet sich die Lageranordnung durch einen besonders einfachen Aufbau aus einer äußeren Hülse bzw. Buchse mit darin einvulkanisierten gummielastischen Zwischenelementen bzw. Gummielementen oder einer Gummibuchse aus. Die Lageranordnung kann dabei als einfaches Bauteil aus mindestens zwei, jedoch maximal drei miteinander verbundenen Elementen ausgeführt sein und ist im vormontierten Zustand auf einfache Art und Weise lager- und handelbar. Dies gilt in Analogie auch für die äußere Buchse. Die Funktion der äußeren Buchse wird dann im Innenumfang der Lagerbohrung bzw. wenigstens einem Teil davon zugewiesen.

Bezüglich der Werkstoffe für die die Funktion der Hülsen bzw. Buchsen übernehmenden Elemente bestehen jeweils eine Vielzahl von Möglichkeiten. Gemäß einer besonders vorteilhaften Ausführung wird für die Ausbildung der Buchsen Stahl gewählt. Die gewählte Geometrie und/oder die Materialeigenschaften der für die gummielastischen Zwischenelemente bzw. bei einseitiger Ausführung der Gummibuchsen verwendeten elastischen Materialien sind die Variablen einer Funktion zur Charakterisierung der Eigenschaften der Gelenkwelle. Wird dabei eine Gelenkwelle mit höherer Verdrehsteifigkeit und nur geringem Beugewinkel benötigt, kann beispielsweise die Wandstärke der Gummibuchse reduziert und/oder die Härte des verwendeten gummielastischen Materials heraufgesetzt werden. Wird hingegen eine weiche Gelenkwelle mit geringerer Drehfederstärke benötigt, so kann eine Gummibuchse mit größerer Wandstärke aus weicherem Gummimaterial eingesetzt werden.

Die erfindungsgemäße Lösung findet vorzugsweise in Gelenkwellen Verwendung. Diese umfassen einen Mittelteil mit beidseitig an diesem angeordneten Gelenkgabeln, die mittels einer Kreuzgelenkanordnung mit einem weiteren Anschlusselement koppelbar sind. Die Gelenkwelle fungiert in dieser Ausgestaltung als elastische Kupplung. Bei Verwendung der erfindungsgemäß gestalteten Kreuzgelenkanordnung, insbesondere der Lageranordnung zur Lagerung von Zapfenkreuzen kann der Kardanfehler auf einfache Art und Weise ohne großen Verschleiß an den entsprechenden Lagerelementen und Anschlusselementen ausgeglichen werden.

Für die Ausbildung der Gelenkgabel bestehen dabei eine Mehrzahl von Möglichkeiten. Diese kann einteilig oder aber geteilt ausgeführt sein. Im letztgenannten Fall ist vorzugsweise der Flansch geteilt.

Die Lagerbohrung zur Aufnahme der Lageranordnung zur Lagerung der Zapfen kann als Blindbohrung oder Durchgangsöffnung ausgeführt sein. Die konkrete Wahl hängt vom Einsatzfall ab und liegt im Ermessen des zuständigen Fachmannes. Entsprechend der Ausführung der Lageranordnung und des Zapfenkreuzes kann die Gelenkgabelhälfte mit geteilter Lagerbohrung oder einteiliger Lagerbohrung ausgeführt sein. Im erstgenannten Fall kann dabei auf eine Unterteilung der Gelenkgabel in Gelenkgabelhälften im Flanschbereich verzichtet werden. Die Unterteilung wird in den Lagerteilen verlegt. Im zweiten Fall wird in der Regel die Gelenkgabel aus zwei Gelenkgabelhälften bestehen, die miteinander gekoppelt sind.

Die erfindungsgemäße Lösung wird nachfolgend anhand von Figuren erläutert.

Darin ist im Einzelnen folgendes dargestellt:
- Figur 1: verdeutlicht in schematisch vereinfachter Darstellung eine erste Ausführung einer erfindungsgemäß gestalteten Lageranordnung als separate Einheit;
- Figur 2: verdeutlicht eine Lageranordnung gemäß Figur 1 mit Ausführung der Zwischenelemente als integrale Baueinheit;
- Figuren 3a und 3b: verdeutlichen anhand der in den Figuren 1 und 2 dargestellten Ausführungen, die frei von einer inneren Buchse sind;
- Figuren 3c bis 3f: verdeutlichen besonders vorteilhafte Ausführungen einer erfindungsgemäßen Kreuzgelenkanordnung anhand eines Ausschnittes aus dieser in integrierter Bauweise;
- Figur 4: verdeutlicht ein Zapfenkreuz mit erfindungsgemäß gestalteten Lageranordnungen;
- Figur 5: verdeutlicht eine Gelenkwelle mit erfindungsgemäß gestalteten Kreuzgelenkanordnungen.

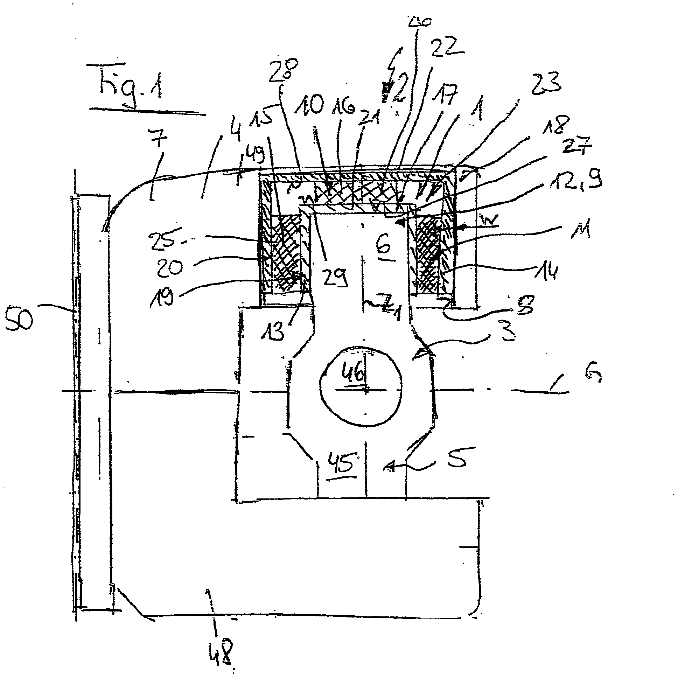

Figur 1 verdeutlicht in schematisch vereinfachter Darstellung die konstruktive Ausgestaltung einer erfindungsgemäß gestalteten Lageranordnung 1 für eine Kreuzgelenkanordnung 2 in Einbaulage in einer Schnittdarstellung durch ein Zapfenkreuz 3 in einer durch die Zapfenachse Z1 und die Gelenkachse G beschreibbaren Ebene in einer Ansicht auf eine in einer Gelenkgabel 4 gelagerte Zapfenanordnung 5 eines Zapfenkreuzes 3. Dabei sind zur Veranschaulichung nur die Zapfen 6 und 45 der Zapfenanordnung 5 dargestellt. Der Zapfen 6 bildet mit dem 180° zu diesem versetzten Zapfen 45 eine Zapfenanordnung 5. Dies gilt in Analogie auch für die beiden jeweils um 90° zum Zapfen 6 versetzt angeordneten Zapfen. Die Gelenkgabel 4 umfasst im einfachsten Fall zwei Gelenkgabelhälften, wobei hier der Zapfen 46 dargestellt in der die Gelenkgabelhälfte 7 der Zapfen 6 und in der Gelenkgabelhälfte 48 der Zapfen 45 gelagert ist. Das Zapfenkreuz 3 ist mit seiner Zapfenanordnung 5, insbesondere den einzelnen Zapfen, hier dem Zapfen 6 in der Gelenkgabel 4 im Bereich von deren Lagerbohrung 8 im Lagerteil 49 mittels jeweils einer Lageranordnung 1 gelagert. Zur Verdeutlichung sind hier lediglich die Lagerbohrung 8 und die Lageranordnung 1 für die Gelenkgabelhälfte 7 dargestellt. Diese Aussagen gelten auch für die hier nicht dargestellte um 180° versetzte Anordnung des Zapfens 48 des Zapfenkreuzes 3 sowie der dazugehörigen Lagerbohrung und der Lageranordnung. Die zu den in der Gelenkgabel 4 gelagerten weiteren, um 90° zum Zapfen 6 versetzten Zapfen des Zapfenkreuzes 3 sind in einer weiteren, hier nicht im Einzelnen dargestellten Gelenkgabel, umfassend vorzugsweise zwei Gelenkgabelhälften, im Bereich von deren Lagerbohrungen 8 mittels ebenfalls jeweils einer erfindungsgemäßen Lageranordnung 1 gelagert. Die Gelenkgabel 4 umfasst ferner einen Flanschteil 50 zur Verbindung mit Anschlusselementen. Die Lagerordnung 1 umfasst ein Axiallager 10 und ein Radiallager 11. Die erfindungsgemäß gestaltete Lageranordnung 1 umfasst dabei eine erste, den Zapfen 6 in seinem vom Zapfenende 9 gebildeten Endbereich 12 in axialer und radialer Richtung umschließende innere Lagerbuchse 13, eine die innere Lagerbuchse 13 Kreuzgelenkanordnung wenigstens teilweise in radialer und axialer Richtung umschließende äußere Lagerbuchse 14. Zwischen beiden ist jeweils ein gummielastisches Zwischenelement 15 und 16 für das Radiallager 11 und das Axiallager 10 angeordnet. Für die in der hier dargestellten Ausführung sind sowohl die innere Lagerbuchse 13 als auch die äußere Lagerbuchse 14 jeweils in ihrem am Zapfenende 9 angeordneten Endbereich 17 bzw. 18 geschlossen ausgeführt. Die innere Lagerbuchse 13 sowie auch die äußere Lagerbuchse 14 umfassen dazu ein erstes röhrenförmiges vorzugsweise zylindrisch ausgeführtes Element 19 bzw. 20 und ein zweites, im Wesentlichen senkrecht zu diesem angeordnetes Deckelelement 21 für die innere Lagerbuchse 13 und 22 für die äußere Lagerbuchse 14. Vorzugsweise sind die innere Buchse 13 und die äußere Lagerbuchse 14 aus Stahl gefertigt. Die Buchse ist dabei entsprechend dem Einsatzfall durch eine bestimmte Wandstärke w charakterisiert. Gemäß einer ersten Ausführungsform sind elastische Zwischenelemente, insbesondere ein gummielastisches Zwischenelement 15 für das Radiallager 11 und ein gummielastisches Zwischenelement 16 für das Axiallager 10 vorgesehen. Das elastische Zwischenelement 15 ist dabei als Gummibuchse 25 ausgeführt, welche den Zapfen 6 des Zapfenkreuzes 3 in Umfangsrichtung und auf wenigstens einem Teil seiner Erstreckung in axialer Richtung umschließt. Das elastische Zwischenelement 16 ist als Scheibenelement 26 ausgebildet, wobei die Anordnung vorzugsweise im Bereich der Zapfenstirnseite 27 bzw. an der Innenfläche 28 der äußeren Lagerbuchse 14 bzw. der Außenfläche 29 der inneren Lagerbuchse 13 erfolgt. Die Anordnung der einzelnen elastischen Zwischenelemente 15 und 16 erfolgt im Wesentlichen senkrecht zueinander unter Beibehaltung eines Zwischenraumes 23 zwischen diesen zur Realisierung einer Verformung unter Belastung.

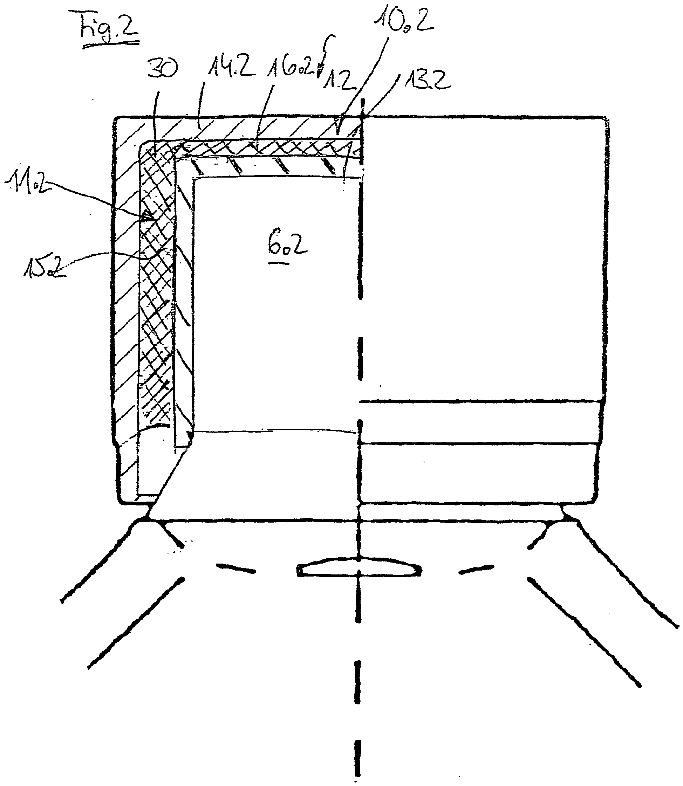

Die Figur 2 verdeutlicht in schematisch vereinfachter Darstellung anhand eines Ausschnittes aus einer Kreuzgelenkanordnung 2 gemäß Figur 1 auf einen Zapfen 6 eine weitere alternative Ausgestaltungsmöglichkeit der Lageranordnung 1.2. Auf die Darstellung der Gelenkgabel wurde verzichtet. Diese umfasst eine innere Lagerbuchse 13.2 und eine äußere Lagerbuchse 14.2, zwischen denen ein elastisches Element in Form des Zwischenelements 30 für die einzelnen Funktionen angeordnet ist. Das elastische Zwischenelement 30 umfasst die elastischen Zwischenelemente 15.2 und 16.2, wobei das elastische Zwischenelement 30 einteilig ausgeführt ist. Über dieses werden somit die Funktionen der einzelnen Lager, das Radiallager 11.2 und das Axiallager 10.2 übernommen. Dieses ist in Analogie zur Figur 1 zwischen der äußeren und inneren Lagerbuchse 14.2 bzw. 13.2 angeordnet. Das elastische Zwischenelement 30 umschließt dabei den Zapfen 6.2 sowohl in Umfangsrichtung als auch in axialer Richtung.

Bei den Figuren 1 und 2 dargestellten Ausführungen handelt es sich um Lageranordnungen mit elastischen Elementen, die geeignet sind, Verformungen in der Gesamtkonstruktion, insbesondere Lagerveränderungen voneinander benachbarten Elementen relativ zueinander zu kompensieren. Vorzugsweise können die elastischen Elemente 15, 15.2 oder 16, 16.2 bzw. das elastische Zwischenelement 30 an einer der beiden Lagerbuchsen, der inneren Lagerbuchse 13, 13.2 oder der äußeren Lagerbuchse 14, 14.2 einvulkanisiert werden.

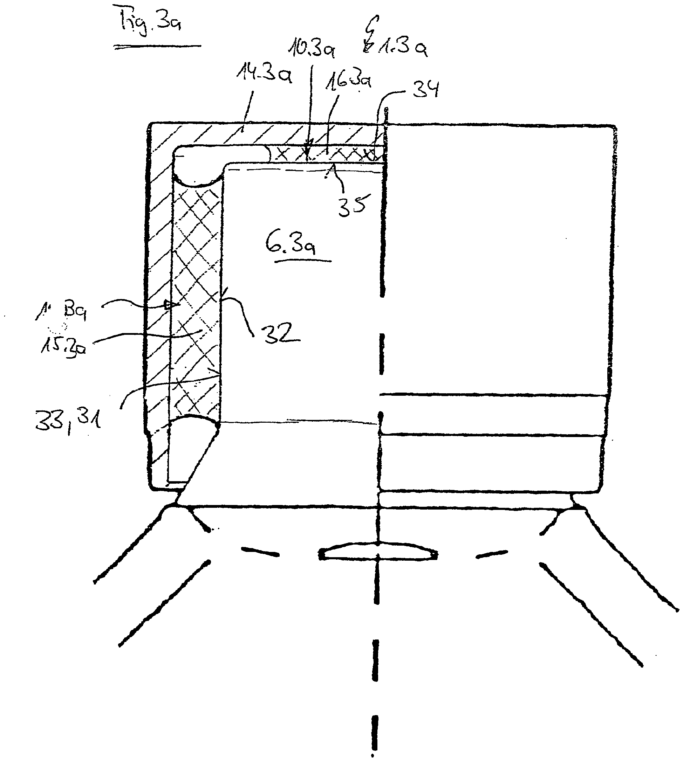

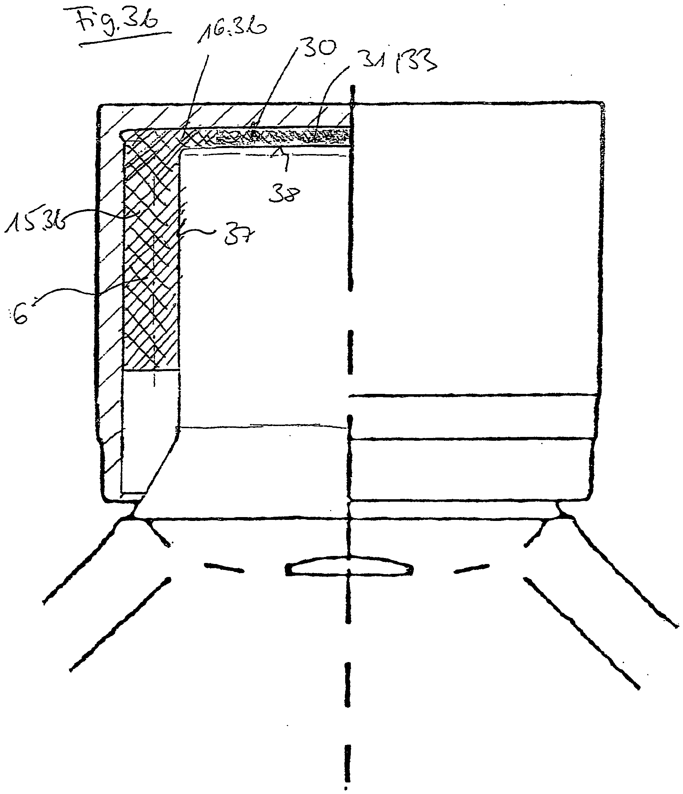

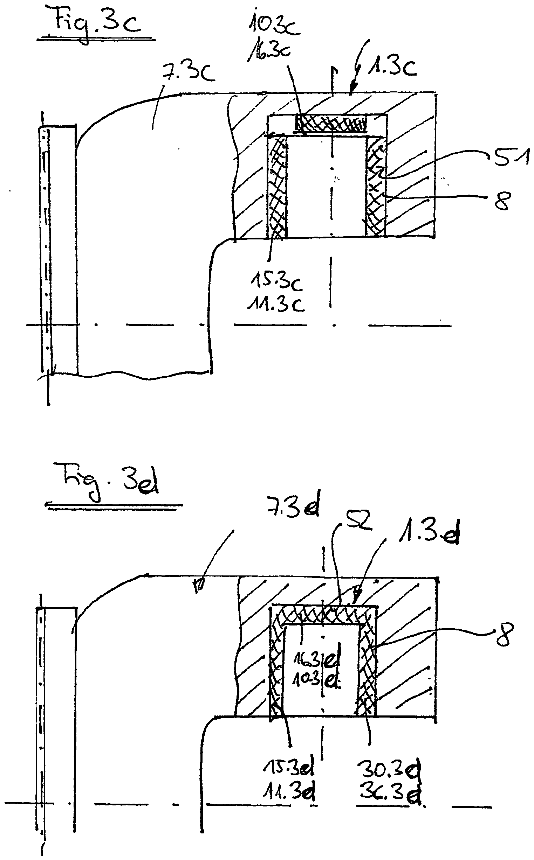

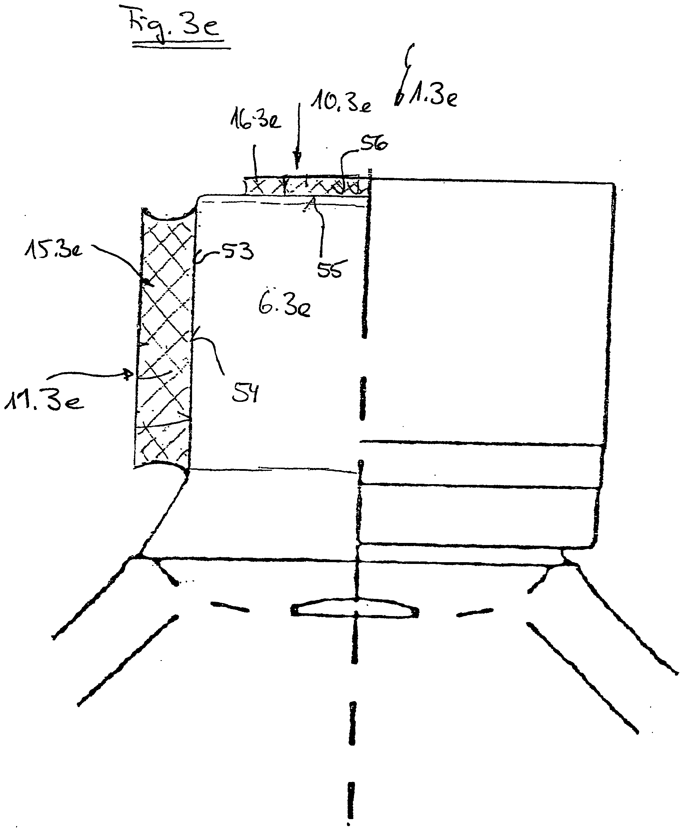

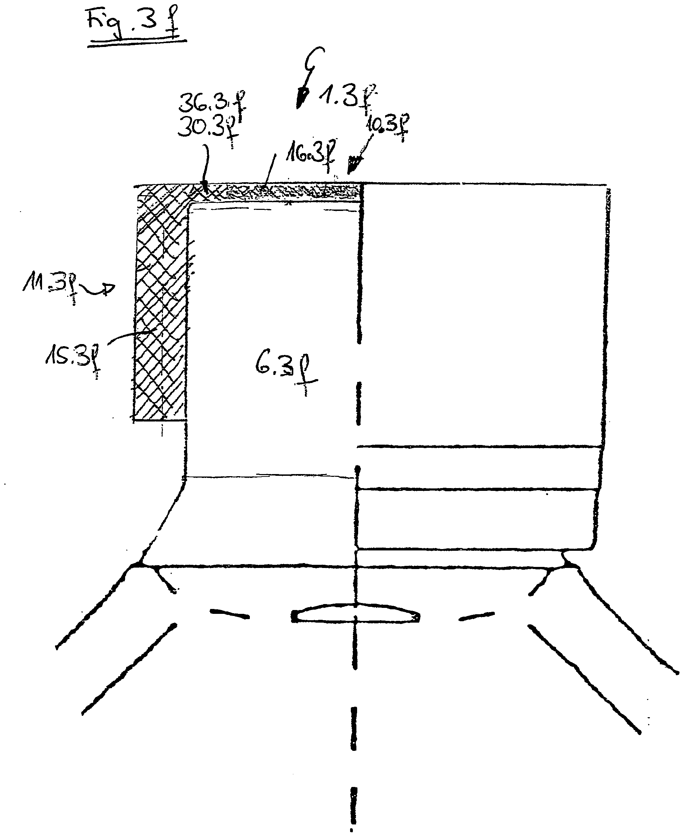

Verdeutlicht die Figur 1 eine Ausgestaltung sowohl mit innerer Lagerbuchse 13 als auch äußerer Lagerbuchse 14, so zeigt Figur 3a eine alternative Ausgestaltung gemäß Figur 1 ohne innere Lagerbuchse 13, wobei in diesem Fall die Funktion der Lagerbuchse 13 vom Zapfen 6.3a, insbesondere der Oberfläche 31 des Zapfens 6.3a übernommen wird. In der Figur 3 a wird dabei eine äußere Lagerbuchse 14.3a verdeutlicht, an der zwei elastische Zwischenelemente 15.2a und 16.3a angeordnet sind, wobei das elastische Zwischenelement 15.2a für das Radiallager 11.2a und das Zwischenelement 16 für das Axiallager 10.3a Verwendung finden. Vorzugsweise besteht zwischen der äußeren Lagerbuchse 14.3a und den Zwischenelementen 15.3a und 16.3a eine feste Verbindung, vorzugsweise ein Stoffschluss, insbesondere durch Einvulkanisieren. Die Abstützung in radialer Richtung, insbesondere des Innenumfanges 32 des elastischen Zwischenelementes 15.3a, welches in Form einer Buchse ausgeführt ist, erfolgt an der Oberfläche 31, insbesondere am Außenumfang 33 des Zapfens 6.3a. Die Abstützung der zum Zapfen 6.3a, insbesondere der Stirnfläche 34 des Zapfens 6.3a gerichteten Stirnfläche 35 des gummielastischen Zwischenelementes 16.3a erfolgt direkt an der Stirnfläche 34 des Zapfens 6.3a.

Die Figur 3b verdeutlicht die mögliche Ausgestaltung einer Ausführung gemäß Figur 2 frei von einer inneren Lagerbuchse 13. Der Grundaufbau entspricht im Übrigen dem in der Figur 2 beschriebenen, weshalb für die gleichen Elemente die gleichen Bezugszeichen verwendet werden. Das elastische Zwischenelement 30 umfasst je die beiden elastischen Elemente 15.3b und 16.3b in integraler Bauweise. Dies bedeutet, dass die Geometrie der sich daraus ergebenden Buchse 36 der der äußeren Lagerbuchse 14.3b entspricht. Vorzugsweise ist auch hier die Buchse 36 in die äußere Lagerbuchse 14.3b einvulkanisiert. Die zum Zapfen 6.3b in Einbaulage weisenden Flächen 37 bzw. 38 stützen sich dabei an der Oberfläche 31, insbesondere dem Außenumfang 33 und 34 des Zapfen 6.3b ab.

Die Figuren 3c - 3f verdeutlichen besonders vorteilhafte alternative Ausgestaltungen der Lageranordnungen 1.3c-1.3f, welche durch die direkte Anbindung der Lager in Form von gummielastischen Vollelementen an die gegeneinander abzustützenden Elemente durch Anvulkanisieren charakterisiert ist.

In den Figuren 3a - 3f werden zur Verdeutlichung der Kopplung der einzelnen gummielastischen Zwischenelemente 16.3c bis 16.3f lediglich nur die in vorteilhafter Weise miteinander unlösbar verbundenen Elemente der Kreuzgelenkanordnung 2.3c - 2.3f dargestellt. Denkbar ist es auch wie hier nicht dargestellt, die gummielastischen Zwischenelemente 16.3c - 16.3f als separate Elemente zwischen der Gelenkgabel, insbesondere der Gelenkgabelhälfte 7.3c - bis 7.3f und dem Zapfen 6.3c - 6.3f einzuordnen. Die Lagerfixierung der einzelnen Lager 10.3c - 10.3f für das Axiallager und 11.3c -11.3f für das Axiallager und 11.3c -11.3f für das Radiallager erfolgt dann erst bei der Montage durch die räumliche Zuordnung zwischen Gelenkgabel, insbesondere Gelenkgabelhälfte 7.3c - 7.3f und Zapfenkreuz 3.3c - 3.3f, insbesondere dem in der Gelenkgabelhälfte 7.3c - 7.3f zu lagernden Zapfen 6.3c - 6.3f. Die einzelnen Lager der Lageranordnung 1.3c -1.3f umfassen dabei nur gummielastische Zwischenelemente 16.3c -16.3f. Diese sind dabei als Vollelement ausgebildet, d. h. diese sind frei von Ausnehmungen oder randoffenen Aussparungen.

Die Figur 3c verdeutlicht eine erste besonders vorteilhafte Ausgestaltung einer erfindungsgemäß ausgeführten Lageranordnung 1.3c einer Kreuzgelenkanordnung 2.3c anhand eines Ausschnittes aus dieser in einem Axialschnitt durch den in einer Gelenkgabelhälfte 7.3c gelagerten Zapfen eines Zapfenkreuzes. Für jedes Lager der Lageranordnung 1.3c ist ein gummielastisches Zwischenelement - 15.3c für das Radiallager 11.3c und 16.3c für das Axiallager 10.3c - vorgesehen. Über diese stützt sich dabei direkt der in die Gelenkgabelhälfte 7.3c gelagerte Zapfen direkt an der Gelenkgabelhälfte 7.3c, insbesondere dem Innenumfang 51 der Lagerbohrung 8 ab. Die elastischen Zwischenelemente 15.3c und 16.3c sind hier in besonders vorteilhafter Weise am Innenumfang 51 der Lagerbohrung 8 der Gelenkgabelhälfte 7.3c anvulkanisiert. Dabei handelt es sich bei dieser Ausführung um eine Gelenkgabelhälfte 7.3c mit geschlossenem Gabelauge, d. h. als Blindbohrung ausgeführter Lagerbohrung 8.

Die Figur 3d verdeutlicht eine Weiterentwicklung gemäß Figur 3c, bei welcher die beiden gummielastischen Zwischenelemente 15.3 die für das Radiallager 11.3d und 16.3d für das Axiallager 10.3d zu einer baulichen Einheit 30.3d zusammengefasst sind. Diese bilden dabei eine geschlossene Buchse 36.3d. Auch hier ist die Gelenkgabelhälfte 7.3d mit geschlossener Lagerbohrung 8 ausgebildet. Die in axialer Richtung weisende Fläche der Lagerbohrung 8 übernimmt dabei die Funktion eines ansonsten für Gelenkgabeln mit offenem Gabelauge vorzusehenden Deckels. Zur vereinfachten Lagezuordnung und Fixierung ist auch hier die Buchse 36.3d in einer Gelenkgabelhälfte 7.3d anvulkanisiert. Aufgrund der Geometrie des als Buchse 36.3d vorliegenden elastischen Zwischenelementes 30.3d ist eine unlösbare Verbindung nicht zwingend erforderlich.

Die Figuren 3e und 3f verdeutlichen alternative Ausgestaltungsmöglichkeiten der Anbindung der Lager 10.3e, 10.3f bzw. 11.3e, 11.3f an eines der beiden gegeneinander abzustützenden Elemente - Gelenkgabelhälfte 7.3e, 7.3f und Zapfen 6.3e, 6.3f -, wobei die Anbindung hier an den Zapfen 6.3e, 6.3f des Zapfenkreuzes 3.3e, 3.3f erfolgt. Daher wurde auf die Darstellung der entsprechenden Gelenkgabelhälfte 7.3 verzichtet. Die Figur 3e verdeutlicht dabei eine Ausführung der Lageranordnung 1.3e mit jeweils separaten, das Axiallager 10.3e und das Radiallager 11.3e bildenden gummielastischen Zwischenelementen 16.3e und 15.3e. Diese sind dabei am Außenumfang des Zapfens 6.3e anvulkanisiert und frei von einer Verbindung miteinander. Auch bei diesen Zwischenelementen 15.3e und 16.3e handelt es sich um Vollelemente aus wenigstens teilweise gummielastischem Material. Das Radiallager 11.3e bildende gummielastische Zwischenelement 15.3e ist dabei als Buchse ausgeführt, während dass das Axiallager 10.3e bildende gummielastische Zwischenelement 16.3e an als gummielastisches Scheibenelement ausgebildet ist. Die Buchse liegt dabei mit ihrem Innenumfang 53 am Außenumfang 54 des Zapfen 6.3e auf. Dies gilt auch für die Stirnfläche 55 des als Scheibenelement ausgebildeten gummielastischen Zwischenelementes 16.3e. Diese liegt auf der von der Gelenkgabelachse weggewandten Stirnseite 56 des Zapfens 6.3e auf. Vorzugsweise sind die einzelnen gummielastischen Zwischenelemente 15.3e und 16.3e unlösbar, vorzugsweise durch stoffflüssige Verbindung mit dem Zapfen 6.3e verbunden. Dadurch wird eine genaue Lagerfixierung der einzelnen, die Lager 10.3e und 11.3e bildenden Zwischenelemente 15.3e und 16.3e der Lageranordnung 1.3e erzielt.

Die Figur 3f verdeutlicht eine vorteilhafte Weiterentwicklung gemäß Figur 3e, bei welcher die das Radiallager 11.3f und das Axiallager 10.3f bildenden gummielastischen Zwischenelemente 15.3f und 16.3f zu einer baulichen Einheit in Form einer einseitig verschlossenen Buchse 36.3f zusammengefasst sind. Auch in diesem Fall ist zwischen den einzelnen die Lager bildenden Zwischenelementen 15.3f und 16.3f und dem Zapfen 6.3f eine unlösbare Verbindung vorgesehen, die durch Stoffschluss realisiert wird. Vorzugsweise sind die gummielastischen Zwischenelemente 15.3f bzw. 16.3f bei baulicher Zusammenfassung 30.3f an die Oberfläche des Zapfens 6.3f anvulkanisiert.

Bei den in den Figuren 3c - 3f dargestellten Lösungen erfolgt die Abstützung der beiden Bauteile Zapfen 6.3 und Gelenkgabelhälfte 7.3 direkt über die gummielastischen Zwischenelemente 15.3 und 16.3 bzw. bei baulicher Zusammenfassung 30.3. Dies bedeutet, es sind keinerlei weitere Elemente zwischengeschaltet. Bei den in den Figuren 1 - 3b dargestellten Ausführungen erfolgt die Abstützung indirekt über ein weiteres die Zwischenelemente 15 und 16 tragendes Element in Form von Buchsen. Bietet die letztgenannte Möglichkeit den Vorteil der Austauschbarkeit einer bestehenden konventionellen Lageranordnung gegen eine erfindungsgemäß gestaltende aufgrund der nicht erforderlichen Modifikationen an den gegeneinander abzustützenden Elementen - Gelenkgabelhälfte und Zapfen bzw. Zapfenkreuz - bietet die Ausführung mit direkter Abstützung über die Zwischenelemente und vorzugsweise integrierter Ausbildung der Lageranordnung an den gegeneinander abzustützenden Elementen den Vorteil einer sehr hohen Kompaktheit der Gesamtlageranordnung.

Bei allen genannten Ausführungen wird unter dem Begriff gummielastisches Zwischenelement ein Element verstanden, welches wenigstens teilweise oder vorzugsweise vollständig aus einem Material besteht, dessen Verformung durch ein bestimmtes Kraft-Weg-Verhalten charakterisiert ist. Als Materialien können dabei Naturkautschuk, ein synthetischer Kautschuk oder Kunststoffe, die ebenfalls ein derartiges gummielastisches Verhalten aufweisen, elastomere oder polymere Verwendung finden. Diese zeichnen sich durch die Eigenschaft aus, eine Dehnung des mehrfachen (bis zu 10fachen) Betrages ihrer Länge unbeschadet zu überstehen und bei Weglassen der Kraft in den Ursprungszustand zurückzugeben.

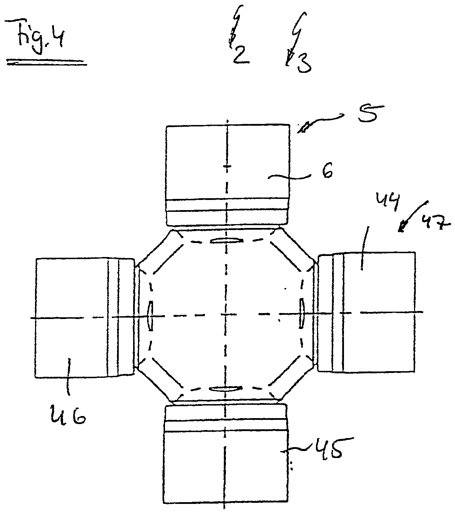

Figur 4 verdeutlicht in schematisch vereinfachter Darstellung ein Zapfenkreuz 3 aus vier zueinander in Umfangsrichtung versetzt angeordneten Zapfen 6, 44, 45, 46. Vorzugsweise sind die Achsen der Zapfen bzw. der jeweils zwei zueinander um 180° versetzte Zapfen 6 und 45 bzw. 44 und 46 umfassende Zapfenanordnungen 5 und 47 in einer Ebene angeordnet. Die erfindungsgemäße Lösung ist jedoch auch auf Zapfenkreuze 3 anwendbar, die durch parallel zueinander in vernetzten angeordnete Zapfenanordnungen 5, 47 charakterisiert ist. Figur 4 verdeutlicht in schematisch vereinfachter Darstellung ein Zapfenkreuz 3 mit erfindungsgemäß ausgeführten Lageranordnungen 1, hier im Einzelnen der Lagerandordnungen 1.1 bis 1.4.

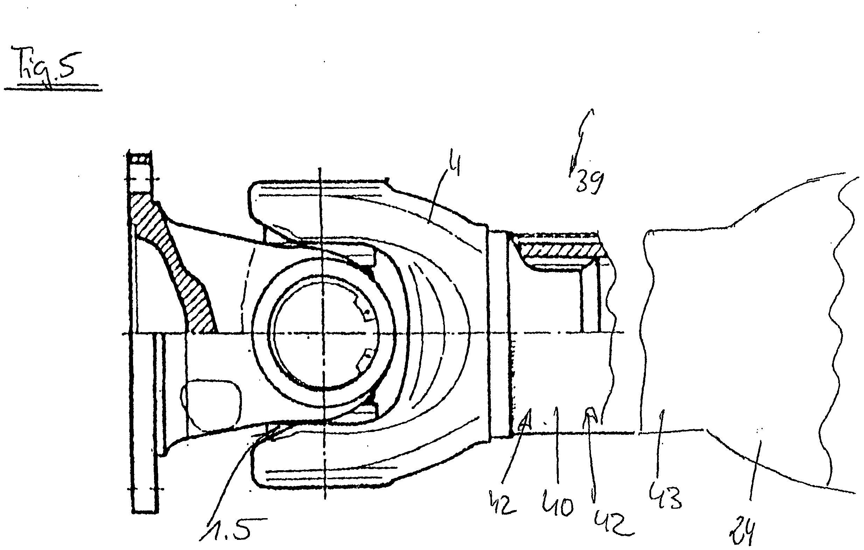

Die Figur 5 verdeutlicht in schematisch vereinfachter Darstellung die Anwendung einer erfindungsgemäß gestalteten Kreuzgelenkanordnung 2.5 mit erfindungsgemäßer Lageranordnung 1.5 in einer Gelenkwelle 39 anhand eines Ausschnittes. Daraus ist ersichtlich, dass diese ein Mittenteil 40 umfasst, an welchem beidseitig zur Kopplung mit benachbarten Bauelementen jeweils eine Kreuzgelenklageranordnung 2 angeordnet ist. Dazu ist das Mittenteil mit jeweils wenigstens einer Gelenkgabel 4 und 41 an den beiden voneinander wegweisenden Enden 42 und 43 angeordnet.

Jede Gelenkgabel 4 und 24 ist vorzugsweise mehrteilig aufgeführt. Diese umfasst mindestens einen Lagerteil 49 und einen Flanschteil 50. Vorzugszweise ist der Flanschteil 50 geteilt ausgeführt.

### Bezugszeichenliste

- 1, 1.2, 1.3a,1.3b; 1.3c;1.3d; 1.3e 1.3f: Lageranordnung
- 2, 2.2, 2.3a, 2.3b, 2.3c, 2.3d, 2.3e, 2.3f: Kreuzgelenkanordnung
- 3, 3.2, 3.3a, 3.3b: Zapfenkreuz
- 4: Gelenkgabel
- 5: Zapfenanordnung
- 6, 6.2, 6.3a, 6.3b, 6.3c, 6.3d, 6.3e6.3f: Zapfen
- 7: Gelenkgabelhälfte
- 8: Lagerbohrung
- 9: Zapfenende
- 10, 10.2, 10.3a, 10.3b, 10.3c, 10.3d, 10.3e, 10.3f: Axiallager
- 11, 11.2, 11.3a, 11.3b, 11.3c, 11.3d, 11.3e, 11.3f: Radiallager
- 12: Endbereich des Zapfens
- 13, 13.2: innere Lagerbuchse
- 14, 14.2, 14.3a, 14.3b: äußere Lagerbuchse
- 15, 15.2, 15.3a, 15.3b, 15.3c, 15.3d, 15.3e, 15.3f: gummielastisches Zwischenelement
- 16, 16.2, 16.3a,16.3b, 16.3c, 16.3d, 16.3e, 16.3f: gummielastisches Zwischenelement
- 17: Bereich
- 18: Bereich
- 19: rohrförmiges Element
- 20: rohrförmiges Element
- 21: Deckelelement
- 22: Deckelelement
- 23: Zwischenraum
- 24: Gelenkgabel
- 25: Gummibuchse
- 26: Scheibenelement
- 27: Stirnseite
- 28: Innenfläche
- 29: Außenfläche
- 30, 30.3d, 30.3f: gummielastisches Zwischenelement
- 31: Oberfläche
- 32: Innenumfang
- 33: Außenumfang
- 34: Stirnfläche
- 35: Stirnfläche
- 36, 36.3d, 36.3f: Buchse
- 37: Fläche
- 38: Fläche
- 39: Gelenkwelle
- 40: Mittenteil
- 41: Gelenkgabel
- 42: Ende
- 43: Ende
- 44: Zapfen
- 45: Zapfen
- 46: Zapfen
- 47: Zapfenanordnung
- 48: Gelenkgabelhälfte
- 49: Lagerteil
- 50: Flanschteil
- 51: Innenumfang der Lagerbohrung
- 52: Fläche
- 53: Innenumfang
- 54: Außenumfang
- 55: Stirnfläche
- 56: Stirnseite

## Patentansprüche

1. Kreuzgelenkanordnung (2; 2.2; 2.3a; 2.3b; 2.3c; 2.3d)
1.1 mit wenigstens einer Gelenkgabel (4), umfassend einen Flanschtell (50) und zwei Lagerwelle (49) mit jeweils einer Lagerbohrung (8);
1.2 mit einem Zapfenkreuz (3; 3.2; 3.3a; 3.3b; 3.3c; 3.3d);
1.3 mit in der Gelenkgabel (4, 24) In den Lagerbohrungen (8) über Lageranordnungen (1; 1.2; 1.3a; 1.3b; 1.3c; 1.3d; 1.3e; 1.3f; 1.4) gelagerten Zapfen (6; 6.2; 6.3a; 6.3b; 6.3c; 6.3d; 6.3e);
1.4 die Lageranordnung (1; 1.2; 1.3a; 1.3b; 1.3c; 1.3d; 1.3e; 1.3f; 1.4) umfasst ein Radiallager (11; 11.2; 11.3a; 11.3b; 11.3c; 11.3d; 11.3e; 11.3f) und ein Axiallager (10; 10.2; 10.3a; 10.3b; 10.3c; 10.3d; 10.3e; 10.3f); wobei das Axiallager und das Radiallager (10; 11; 10.2, 11.2; 1 0.3a; 11.3a; 10.3b; 11.3b; 10.3c; 11.3c; 10.3d; 11.3d; 10.3e; 11.3e; 10.3f; 11.3f) sind als gummielastische Verformungslager ausgeführt und die gummielastischen Lager durch ein gummlelastisches Zwischenelement (15.3. 16.3) gebildet werden, das stoffschlüssig mit dem Innenumfang der Lagerbohrung (8) und dem Außenumfang der Zapfen ((6; 6.2; 6.3a; 6.3b; 6.3c; 6.3d; 6.3e) verbunden ist, oder die gummielastischen Lager durch ein gummielastisches Zwischenelement (15.3, 16.3) und wenigstens ein das gummielastische Zwischenelement (15.3, 16.3) tragendes Element in Form von Hülsen oder Buchsen gebildet werden, wobei das gummielastische Zwischenelement an dem tragenden Element anvulkanisiert ist **dadurch gekennzeichnet dass**
1.5 die Abstützung der belden Bauteile Zapfen (6; 6.2; 6.3a; 6.3b; 6.3c; 6.3d; 6.3e) und Gelenkgabel (4) direkt über die gummlelastischen Lager und frei von weiteren Elementen erfolgt, so dass sich mit steigender Verschiebung oder Verdrehung zwischen den Zapfen und der Gelenkgabel (4) elastische Rückstellkräfte und Rückstellmomente In dem gummlelastischen Lager aufbauen.

2. Kreuzgelenkanordnung (2.3d; 2.3f) nach Anspruch 1, **dadurch gekennzeichnet, dass** die gummielastlschen Zwischenelemente (15.3d; 16.3d; 15.3f; 16.3f) zu einer baulichen Einheit (30.3d; 30.3f) zusammengefasst sind, die als einseitig geschlossene Buchse (36.3d; 36.3f) ausgeführt ist.

3. Kreuzgelenkanordnung (2.3c; 2.3d; 2.3e; 2.3f) nach Anspruch 1 oder 2, **dadurch gekennzeichnet, dass** der Stoffschluss durch Vulkanisation erfolgt.

4. Kreuzgelenkanordnung (2; 2.2; 2.3a; 2.3b; 2.4) nach Anspruch 1,
**gekennzeichnet durch** die folgenden Merkmale:
das einzelne gummielastische Lager (10; 11; 11.2; 12.2; 13.2; 14.2) umfasst eine erste innere Buchse (13; 13.2) und eine zweite äußere Buchse (14; 14.2; 14.3a; 14.3b);
zwischen der inneren Buchse (13; 13.2) und der äußeren Buchse (14; 14.2; 14.3a; 14.3b) ist jeweils ein gummielastisches Zwischenelement (15; 16; 15.2; 16,2; 15.3a; 16,3a; 15.3b; 16.3b) angeordnet.

5. Kreuzgelenkanordnung (2; 2.2; 2.3a; 2.3b; 2.4) nach Anspruch 4, **dadurch gekennzeichnet, dass** die äußere Buchse (14; 14.2; 14.3a; 14,3b) für das Axlallager (10; 10.2; 10.3a; 10.3b) und das Radiallager (11; 11.2; 11.3a; 11.3b) sowie die innere Buchse (13; 13.2) für das Axiallager (10; 10.2; 10.3.a; 10.3b) und das Radiallager (11; 11.2; 11.3a; 11.3b) jewells von einem das Zapfenende (9) in axialer und radialer Richtung umschließenden Einheit In Form einer an einem Ende verschlossenen Buchse (13; 14; 13.2; 14,2; 14.3a; 14.3b) gebildet werden.

6. Kreuzgelenkanordnung (2; 2.2; 2.3a; 2.3b; 2.4) nach Anspruch 5, **dadurch gekennzeichnet, dass** die gummielastischen Zwischenelemente (15; 16; 15.2; 16.2; 15.3a; 16,3a; 15.3b; 16.3b) für das Axiallager (10; 10.2; 10.3a; 10.3b) und das Radiallager von separaten Elementen gebildet werden, die zwischen der äußeren und der inneren an einem Ende verschlossenen Buchse (13; 14; 13.2; 14.2; 14.3a; 14.3b) angeordnet sind.

7. Kreuzgelenkanordnung (2; 2.2; 2.3a; 2.3b; 2.4) nach Ansprüch 5, **dadurch gekennzeichnet, dass** die gummielastlschen Zwischenelemente (15.2; 16.2) für das Axial- und das Radiallager (10.2; 11.2) von einer baulichen Einheit in Form einer an einem Ende verschlossenen Zwischenelementbuchse (30) gebildet werden.

8. Kreuzgelenkanordnung (2; 2.2; 2.3a; 2.3b; 2.4) nach einem der Ansprüche 1 bis 3 **dadurch gekennzeichnet, dass** das gummielastische Lager frei von einer inneren Buchse ist und die gummielastischen Zwischenelemente (15.3a; 16.3a; 15.3b; 16.3b) für das Axiallager (10.3a; 10.3b) und das Radiallager (11.3a; 11.3b) sich direkt an der Oberfläche (31) des zu lagernden Zapfes (6; 44; 45; 46) abstützen.

9. Kreuzgelenkanordnung (2; 2.2; 2.3a; 2.3b; 2.4) nach einem der Ansprüche 4 bis 7 **dadurch gekennzeichnet, dass** die Innere Buchse und/oder äußere Buchse (13; 14; 13.2; 14.2; 14.3a: 14.3b) aus Stahl besteht.

10. Kreuzgelenkanordnung (2; 2.2; 2.3a; 2.3b; 2.4) nach einem der Ansprüche 1 bis 9 **dadurch gekennzeichnet, dass** die gummielastischen Zwischenelemente (15; 16; 15.2; 16.2; 15.3a; 15.3b; 16.3a; 16.3b; 30) an mindestens einer der beiden Buchsen - Innere Buchse (13; 13.2) oder äußere Buchse (14; 14.2; 14.3a; 14.3b) - oder der Oberfläche des Zapfens (6; 44; 45; 46) anvulkanisiert sind.

11. Kreuzgelenkanordnung (2; 2.2; 2.3a; 2.3b; 2.3c; 2.3d; 2.3e; 2.3f; 2.4) nach einem der Ansprüche 1 - 10, **dadurch gekennzeichnet, dass** die elastischen Zwischenelemente (15; 16; 15.3a; 16.3a) für das Axiallager (10; 10.3a; 10.3c; 10.3e) und das Radlallager (11; 11.3a; 11.3c; 11.3e) unter Bildung eines Zwischenraumes (23) zueinander angeordnet sind.

12. Kreuzgelankanordnung (2; 2.2; 2.3a; 2.3b; 2.3c; 2.3d; 2.3e; 2.3f; 2,4) nach einem der Ansprüche 1 - 11, **dadurch gekennzeichnet, dass** die gummielastischen Zwischenelemente (15; 16; 15.2; 16.2; 15.3a; 16.3a: 15.3b; 16.3b; 30) wenigstens teilweise oder vollständig aus einem Naturkautschuk oder synthetischer Kautschuk oder Elastomer oder Kunststoff mit gummielastischen Eigenschaften bestehen.

13. Kreuzgelenkanordnung (2; 2.2; 2.3a; 2.3b; 2.3c; 2.3d; 2.3e; 2.3f; 2.4) nach einem der Ansprüche 1 - 12, **dadurch gekennzeichnet, dass** die gummielastlschen Zwischenelemente (15; 16; 15.2; 16.2; 15.3a; 16.3a; 15.3b; 16.3b; 30) wenigstens teilweise aus Materialien bestehen, die ohne Beschädigung um das Mehrfache Ihrer Länge, insbesondere des bis zu 10fachen Betrages ausdehnbar sind und bei Entlastung in den Ursprungszustand zurückgehen.

14. Kreuzgelenkanordnung (2; 2.2; 2.3a; 2.3b; 2.3c; 2.3d; 2.3e; 2.3f; 2.4) nach einem der Ansprüche 1 -15, **dadurch gekennzeichnet, dass** die Steifigkeit oder Elastizität des einzelnen gummielastlschen Zwischenelementes (15; 16; 15.2; 16.2; 15.3a; 16.3a; 15.3b; 16.3b; 15.3c; 16.3c; 15.3d; 16.3d; 15.3e; 16.3e; 15.3f; 16.3f; 30) als eine Funktion der Geometrie, Insbesondere Dimensionierung und/oder der Materialeigenschaften festgelegt wird.

15. Kreuzgelenkanordnung (2; 2.2; 2.3a; 2.3b; 2.3c; 2.3d; 2.3e; 2.3f; 2.4) nach einem der Ansprüche 1 - 14, **dadurch gekennzeichnet, dass** die Lagerbohrung (8) im Lagerteil (49) als Blindbohrung ausgeführt ist.

16. Kreuzgelenkanordnung (2; 2.2; 2.3a; 2.3b; 2.3c; 2.3d; 2.3e; 2.3f; 2.4) nach einem der Ansprüche 1 - 14, **dadurch gekennzeichnet, dass** die Lagerbohrung (8) im Lagerteil (49) als Durchgangsöffnung ausgebildet ist.

17. Kreuzgelenkanordnung (2; 2.2; 2.3a; 2.3b; 2.3c; 2.3d; 2.3e; 2.3f; 2.4) nach einem der Ansprüche 1 - 16, **dadurch gekennzeichnet, dass** die Gelenkgabel (4) geteilt ausgeführt ist.

18. Kreuzgelenkanordnung (2; 2.2; 2.3a; 2.3b; 2.3c; 2.3d; 2.3e; 2.3f; 2.4) nach einem der Ansprüche 1 - 17, **dadurch gekennzeichnet, dass** das Zapfenkreuz (3) In versetzten Ebenen angeordneten Zapfen (6) ausgeführt ist.

19. Gelenkwelle (39), umfassend zwei Kreuzgelenkanordnungen (2; 2.2; 2.3a; 2.3b; 2.3c; 2.3d; 2.3e; 2.3f; 2.4) gemäß einem der Ansprüche 1 - 18 mit einem dazwischen angeordneten Mittenteil (40).

## Claims

1. A universal joint assembly (2; 2.2; 2.3a; 2.3b; 2.3c; 2.3d,
1.1 having at least one joint yoke (4), including a flange part (50) and two bearing parts (49) fitted respectively with a bearing bore (8);
1.2 having a journal cross (3; 3, 2; 3.3a; 3.3b; 3.3c; 3.3d);
1.3 having journals (6; 6.2; 6.3a; 6.3b; 6.3c; 6.3d; 6.3e) mounted in the joint yoke (4, 24) in the bearing bores (8) via bearing assemblies (1; 1.2; 1.3a; 1.3b; 1.3c; 1.3d; 1.3e; 1.3f; 1.4);
1.4 the bearing assembly (1; 1.2; 1.3a; 1.3b; 1.3c; 1.3d; 1.3e; 1,3f; 1.4) comprises a radial bearing (11; 11.2; 11.3a; 11.3b; 11,3c; 11.3d; 11,3e; 11,3f) and an axial bearing (10; 10.2; 10.3a; 10.3b; 10.3c; 10.3d; 10.3e), whereas the axial bearing and the radial bearing (10; 11; 10.2; 11.2; 10.3a; 11.3a; 10.3b; 11.3b; 10.3c; 11,3c; 10.3d; 11.3d; 10.3e; 11.3e; 10.3f; 11.3f) are in the form of rubbery-elastic deformation bearings and the rubbery-elastic bearings are formed of a rubbery-elastic intermediate element (15.3, 16.3), which is firmly bonded to the inner periphery of the bearing bore (8) and to the outer periphery of the journals (6; 6.2; 6.3a; 6.3b; 6.3c; 6.3d; 6.3e), or the rubbery-elastic bearings are formed of a rubbery-elastic intermediate element (15.3, 16.3) and at least of an element carrying the rubbery-elastic intermediate element (15.3, 16.3) in the form of sleeves or bushings, whereas the rubbery-elastic intermediate element is vulcanised on the carrying element, **characterised in that**
1.5 both components, journals (6; 6.2; 6.3a; 6.3b; 6.3c; 6.3d; 6.3e) and joint yoke (4) are directly supported via the rubbery-elastic bearings without any additional elements, so that elastic restoring forces and restoring torques build up with increasing shift or torsion between the journals and the joint yoke (4).

2. The universal joint assembly (2;3d; 2.3f) of claim 1, **characterised in that** the rubbery-elastic intermediate elements (15.3d; 16.3d; 15.3f; 16.3f) are grouped into a structural unit (30.3d; 30.3f), which is designed as a bushing (36.3d; 36.3f) closed on one side.

3. The universal joint assembly (2;3c; 2.3d; 2.3e; 2.3f) of claim 1 or 2, **characterised in that** the material bond is obtained by vulcanisation.

4. The universal joint assembly (2; 2.2; 2.3a; 2.3b; 2.4) of claim 1, **characterised by** the following features: the individual rubbery-elastic bearing (10; 11; 11.2; 12.2; 13.2; 14.2) comprises a first internal bushing (13; 13.2) and a second external bushing (14; 14.2; 14.3a; 14.3b); a rubbery-elastic intermediate element (15; 16; 15.2; 16,2; 15.3a; 16.3a; 15.3b; 16.3b) is arranged respectively between the internal bushing (13; 13.2) and the external bushing (14; 14.2; 14.3a; 14.3b).

5. The universal joint assembly (2; 2.2; 2.3a; 2.3b; 2.4) of claim 4, **characterised in that** the external bushing (14; 14.2; 14.3a; 14.3b) for the axial bearing (10; 10.2; 10.3a; 10.3b) and the radial bearing (11; 11.2; 11.3a; 11.3b) as well as the internal bushing (13; 13.2) for the axial bearing (10; 10.2; 10.3.a; 10.3b) and the radial bearing (11; 11.2; 11.3a; 11.3b) respectively are formed of a unit enclosing the journal end (9) in axial and radial direction in the form of a bushing (13; 14; 13.2; 14.2; 14.3a; 14.3b) closed at one end.

6. The universal joint assembly (2; 2.2; 2.3a; 2.3b; 2.4) of claim 5, **characterised in that** the rubbery-elastic intermediate elements (15; 16; 15.2; 16.2; 15.3a; 16.3a; 15.3b; 16.3b) for the axial bearing (10; 10.2; 10.3a; 10.3b) and the radial bearing are formed of separate elements, which are arranged between the external and the internal bushings (13; 14; 13.2; 14.2; 14.3a; 14.3b) closed at one end.

7. The universal joint assembly (2; 2.2; 2.3a; 2.3b; 2.4) of claim 5, **characterised in that** the rubbery-elastic intermediate elements (15.2; 16.2) and the axial and the radial bearing (10;2; 11.2) are formed by a structural unit in the form of an intermediate element bushing (30) closed at one end.

8. The universal joint assembly (2; 2.2; 2.3a; 2.3b; 2.4) according to one of the claims 1 to 3, **characterised in that** the rubbery-elastic bearing has no internal bushing and the rubbery-elastic intermediate elements (15.3a; 16.3a; 15.3b; 16.3b) for the axial bearing (10; 3a; 10.3b) and the radial bearing (11;3a; 11.3b) are directly supported on the surface (31) of the journal (6; 44; 45; 46) to be journaled.

9. The universal joint assembly (2; 2.2; 2.3a; 2.3b; 2.4) according to one of the claims 4 to 7, **characterised in that** the internal bushing and/or external bushing (13; 14; 13.2; 14.2; 14.3a; 14.3b) are formed of steel.

10. The universal joint assembly (2; 2.2; 2.3a; 2.3b; 2.4) according to one of the claims 1 to 9, **characterised in that** the rubbery-elastic intermediate elements (15; 16; 15.2; 16.2; 15.3a; 15.3b; 16.3a; 16.3b; 30) are vulcanised on at least one of both bushings - internal bushing (13; 13.2) or external bushing (14; 14.2; 14.3a; 14.3b) - or on the surface of the journal (6; 44; 45; 46).

11. The universal joint assembly (2; 2.2; 2.3a; 2.3b; 2.3c; 2.3d; 2.3e; 2.3f; 2.4) according to one of the claims 1 to 10, **characterised in that** the rubbery-elastic intermediate elements (15; 16; 15.3a; 16.3a) for the axial bearing (10; 10.3a; 10.3c; 10.3e) and the radial bearing (11; 11.3a; 11.3c; 11.3e) are arranged relative to one another by forming an intermediate space (23).

12. The universal joint assembly (2; 2.2; 2.3a; 2.3b; 2.3c; 2.3d; 2.3o; 2.3f; 2,4) according to one of the claims 1 to 11, **characterised in that** the rubbery-elastic intermediate elements (15; 16; 15.2; 16.2; 15.3a; 16.3a; 15.3b; 16.3b; 30) are formed at least partially or completely of a natural rubber, a synthetic rubber, an elastomer or a synthetic material with rubbery-elastic properties.

13. The universal joint assembly (2; 2.2; 2.3a; 2.3b; 2.3c; 2.3d; 2.3e; 2.3f; 2.4) according to one of the claims 1 to 12, **characterised in that** the rubbery-elastic intermediate elements (15; 16; 15.2; 16.2; 15.3a; 16.3a; 15.3b; 16.3b; 30) at least partially are formed of materials which can be stretched several times their length, in particular up to ten times and retrieve their original condition after strain relief.

14. The universal joint assembly (2; 2.2; 2.3a; 2.3b; 2.3c; 2.3d; 2.3e; 2.3f; 2.4) according to one of the claims 1 to 15, **characterised in that** the stiffness or elasticity of the individual rubbery-elastic intermediate element (15; 16; 15.2; 16.2; 15.3a; 16.3a; 15.3b; 16.3b; 15.3c; 16.3c; 15.3d; 16.3d; 15.3e; 16.3e; 15.3f; 16.3f; 30) is defined depending on the geometry, in particular the sizing and/or the material properties.

15. The universal joint assembly (2; 2.2; 2.3a; 2.3b; 2.3c; 2.3d; 2.3e; 2.3f; 2.4) according to one of the claims 1 to 14, **characterised in that** the bearing bore (8) in the bearing part (49) is in the form of a blind bore.

16. The universal joint assembly (2; 2.2; 2.3a; 2.3b; 2.3c; 2.3d; 2.3e; 2.3f; 2.4) according to one of the claims 1 to 14, **characterised in that** the bearing bore (8) in the bearing part (49) is in the form of a though-hole.

17. The universal joint assembly (2; 2.2; 2.3a; 2.3b; 2.3c; 2.3d; 2.3e; 2.3f; 2.4) according to one of the claims 1 to 16, **characterised in that** the joint yoke (4) is a split joint yoke.

18. The universal joint assembly (2; 2.2; 2.3a; 2.3b; 2.3c; 2.3d; 2.3e; 2.3f; 2,4) according to one of the claims 1 to 17, **characterised in that** the journal cross (3) is formed by journals (6) mounted on offset planes.

19. A joint shaft (39), comprising two universal joint assemblies (2; 2.2: 2.3a; 2.3b; 2.3c; 2.3d; 2.3e; 2.3f; 2.4) according to one of claims 1 to 18, separated by a central part (40) mounted there between.

## Revendications

1. Ensemble de joint universel (2; 2.2; 2.3a; 2.3b; 2.3c; 2.3d)
1.1 comportant au moins une fourche d'articulation (4), comprenant une partie bride (50) et deux parties de palier (49) ayant chacune un alésage de palier (8);
1.2 comportant un croisillon (3; 3,2; 3.3a; 3.3b; 3.3c; 3.(3d);
1.3 comprenant des tenons (6; 6.2; 6.3a; 6.3b; 6.3c; 6.3d; 6.3e) disposés dans la fourche d'articulation (4, 24) dans les alésages de palier (8) par le biais d'agencements de palier (1; 1.2; 1.3a; 1.3b; 1.3c; 1.3d; 1.3e; 1.3f; 1.4);
1.4 l'agencement de palier (1; 1.2; 1.3a; 1.3b; 1.3c; 1.3d; 1.3e; 1,3f; 1.4) comprend un palier radial (11; 11.2; 11.3a; 11.3b; 11,3c; 11.3d; 11,3e; 11,3f) et un palier axial (10; 10.2; 10.3a; 10.3b; 10.3c; 10.3d; 10.3e), où le palier axial et le palier radial (10; 11; 10.2; 11.2; 10.3a; 11.3a; 10.3b; 11.3b; 10.3c; 11,3c; 10.3d; 11.3d; 10.3e; 11.3e; 10.3f; 11.3f) se présentent sous forme de paliers de déformation en caoutchouc élastique, et les paliers en caoutchouc élastique sont constitués d'un élément intermédiaire en caoutchouc élastique (15.3, 16.3), lequel est connecté en liaison adhésive à la circonférence interne de l'alésage de palier (8) et à la circonférence externe des tenons (6; 6.2; 6.3a; 6.3b; 6.3c; 6.3d; 6.3e) et les paliers en caoutchouc élastique sont constitués d'un élément intermédiaire en caoutchouc élastique (15.3, 16.3) et d'au moins un élément portant l'élément intermédiaire en caoutchouc élastique (15.3, 16.3) sous forme de manchons ou de douilles, où l'élément intermédiaire en caoutchouc élastique est vulcanisé sur l'élément portant,
**caractérisé en ce que**
1.5 les deux composants, à savoir tenons (6; 6.2; 6.3a; 6.3b; 6.3c; 6.3d; 6.3e) et fourche d'articulation (4) sont directement supportés par les paliers en caoutchouc élastique, sans autres éléments, de sorte que des forces de rappel et des couples de rappel élastiques se forment dans le palier en caoutchouc élastique avec un décalage croissant ou une torsion croissante entre les tenons et la fourche d'articulation (4).

2. Ensemble de joint universel (2; 2.3d; 2.3f) selon la revendication 1, **caractérisé en ce que** les éléments intermédiaires en caoutchouc élastique (15.3d; 16.3d; 15.3f; 16.3f) sont regroupés en une unité de construction (30.3d; 30.3f), conçue comme une douille (36.3d; 36.3d) fermée en une extrémité.

3. Ensemble de joint universel (2; 2.3c; 2.3d; 2.3e; 2.3f) selon la revendication 1 ou 2, **caractérisé en ce que** la liaison adhésive s'effectue par vulcanisation.

4. Ensemble de joint universel (2; 2.2; 2.3a; 2.3b; 2.4) selon la revendication 1, présentant les caractéristiques suivantes: le palier en caoutchouc élastique individuel (10; 11; 11.2; 12.2; 13.2; 14.2) comprend une première douille interne (13; 13.2) et une seconde douille externe (14; 14.2; 14.3a; 14.3b); entre la douille interne (13; 13.2) et la douille externe (14; 14.2; 14.3a; 14.3b) se trouve respectivement un élément intermédiaire en caoutchouc élastique (15; 16; 15.2; 16,2; 15.3a; 16.3a; 15.3b; 16.3b).

5. Ensemble de joint universel (2; 2.2; 2.3a; 2.3b; 2.4) selon la revendication 4, **caractérisé en ce que** la douille externe (14; 14.2; 14.3a; 14.3b) pour le palier axial (10; 10.2; 10.3a; 10.3b) et le palier radial (11; 11.2; 11.3a; 11.3b) de même que la douille interne (13; 13.2) pour le palier axial (10; 10.2; 10.3.a; 10.3b) et le palier radial (11; 11.2; 11.3a; 11.3b) sont constitués respectivement d'une unité entourant l'extrémité du tenon (9) dans les directions axiale et radiale sous forme de douille (13; 14; 13.2; 14.2; 14.3a; 14.3b) fermée en une extrémité.

6. Ensemble de joint universel (2; 2.2; 2.3a; 2.3b; 2.4) selon la revendication 5, **caractérisé en ce que** les éléments intermédiaires en caoutchouc élastique (15; 16; 15.2; 16.2; 15.3a; 16.3a; 15.3b; 16.3b) pour le palier axial (10; 10.2; 10.3a; 10.3b) et le palier radial sont constitués d'éléments séparés, disposés entres les douilles externes et internes (13; 14; 13.2; 14.2; 14.3a; 14.3b) fermées en une extrémité.

7. Ensemble de joint universel (2; 2.2; 2.3a; 2.3b; 2.4) selon la revendication 5, **caractérisé en ce que** les éléments intermédiaires en caoutchouc élastique (15.2; 16.2) prévus pour le palier axial et le palier radial (10.2; 11.2) sont constitués d'une unité de construction sous forme de douille d'élément intermédiaire (30) fermée en une extrémité.

8. Ensemble de joint universel (2; 2.2; 2.3a; 2.3b; 2.4) selon l'une des revendications 1 à 3, **caractérisé en ce que** le palier en caoutchouc élastique est dénué d'une douille interne et les éléments intermédiaires en caoutchouc élastique (15.3a; 16.3a; 15.3b; 16.3b) pour le palier axial (10;3a; 10.3b) et le palier radial (11.3a; 11.3b) s'appuient directement à la surface (31) du tenon (6; 44; 45; 46) à supporter.

9. Ensemble de joint universel (2; 2.2; 2.3a; 2.3b; 2.4) selon l'une des revendications 4 à 7, **caractérisé en ce que** la douille interne et/ou la douille externe (13; 14; 13.2; 14.2; 14.3a; 14.3b) est/sont en acier.

10. Ensemble de joint universel (2; 2.2; 2.3a; 2.3b; 2.4) selon l'une des revendications 1 à 9, **caractérisé en ce que** les éléments intermédiaires en caoutchouc élastique (15; 16; 15.2; 16.2; 15.3a; 15.3b; 16.3a; 16.3b; 30) sont vulcanisés sur au moins l'une des deux douilles - douille interne (13; 13.2) ou douille externe (14; 14.2; 14.3a; 14.3b) - ou à la surface du tenon (6; 44; 45; 46).

11. Ensemble de joint universel (2; 2.2; 2.3a; 2.3b; 2.3c; 2.3d; 2.3e; 2.3f; 2.4) selon l'une des revendications 1 à 10, **caractérisé en ce que** les éléments intermédiaires en caoutchouc élastique (15; 16; 15.3a; 16.3a) pour le palier axial (10; 10.3a; 10.3c; 10.3e) et le palier radial (11; 11.3a; 11.3c; 11.3e) sont disposés l'un par rapport à l'autre en formant un espace intermédiaire (23).

12. Ensemble de joint universel (2; 2.2; 2.3a; 2.3b; 2.3c; 2.3d; 2.3e; 2.3f; 2,4) selon l'une des revendications 1 à 11, **caractérisé en ce que** les éléments intermédiaires en caoutchouc élastique (15; 16; 15.2; 16.2; 15.3a; 16.3a; 15.3b; 16.3b; 30) se composent au moins partiellement ou entièrement d'un caoutchouc naturel, d'un caoutchouc synthétique, d'un élastomère ou d'un matériau synthétique aux propriétés de caoutchouc élastique.

13. Ensemble de joint universel (2; 2.2; 2.3a; 2.3b; 2.3c; 2.3d; 2.3e; 2.3f; 2.4) selon l'une des revendications 1 à 12, **caractérisé en ce que** les éléments intermédiaires en caoutchouc élastique (15; 16; 15.2; 16.2; 15.3a; 16.3a; 15.3b; 16.3b; 30) se composent au moins partiellement de matériaux pouvant s'allonger sans dommage d'un multiple de leur longueur, en particulier jusqu'à dix fois et qui retrouvent leur état d'origine après relâchement de la contrainte.

14. Ensemble de joint universel (2; 2.2; 2.3a; 2.3b; 2.3c; 2.3d; 2.3e; 2.3f; 2.4) selon l'une des revendications 1 à 15, **caractérisé en ce que** la rigidité ou l'élasticité de l'élément intermédiaire en caoutchouc élastique individuel (15; 16; 15.2; 16.2; 15.3a; 16.3a; 15.3b; 16.3b; 15.3c; 16.3c; 15.3d; 16.3d; 15.3e; 16.3e; 15.3f; 16.3f; 30) sont définies en fonction de la géométrie, en particulier du dimensionnement et/ou des propriétés des matériaux.

15. Ensemble de joint universel (2; 2.2; 2.3a; 2.3b; 2.3c; 2.3d; 2.3e; 2.3f; 2.4) selon l'une des revendications 1 à 14, **caractérisé en ce que** l'alésage de palier (8) est sous forme d'alésage borgne dans la partie palier (49).

16. Ensemble de joint universel (2; 2.2; 2.3a; 2.3b; 2.3c; 2.3d; 2.3e; 2.3f; 2.4) selon l'une des revendications 1 à 15, **caractérisé en ce que** l'alésage de palier (8) est sous forme d'ouverture de passage dans la partie palier (49).

17. Ensemble de joint universel (2; 2.2; 2.3a; 2.3b; 2.3c; 2.3d; 2.3e; 2.3f; 2.4) selon l'une des revendications 1 à 16, **caractérisé en ce que** la fourche d'articulation (4) est divisée.

18. Ensemble de joint universel (2; 2.2; 2.3a; 2.3b; 2.3c; 2.3d; 2.3e; 2.3f; 2,4) selon l'une des revendications 1 à 17, **caractérisé en ce que** le croisillon (3) est sous forme de tenons (6) disposés sur des niveaux décalés.

19. Arbre articulé (39), comprenant deux ensembles de joint universel (2; 2.2: 2.3a; 2.3b; 2.3c; 2.3d; 2.3e; 2.3f; 2.4) selon l'une des revendications 1 à 18, possédant une partie centrale (40) disposée entre eux.
